# EUROPEAN PATENT SPECIFICATION

(11) **EP 3 636 525 B1**
(45) Date of publication and mention of the grant of the patent: **30.06.2021**
(21) Application number: 17912392.2
(22) Date of filing: 07.06.2017
(51) Int. Cl.: B62J 17/10, B62J 17/04, B62J 17/02, B62J 23/00

(54) **SADDLED VEHICLE**
SATTELFAHRZEUG
VÉHICULE À SELLE

(43) Date of publication of application: 15.04.2020
(73) Proprietor: Honda Motor Co., Ltd., Tokyo 107-8556 (JP)
(72) Inventor: KIKUCHI, Takehiko, Wako-shi Saitama 107-8556 (JP); NAKANISHI, Ryuichi, Wako-shi Saitama 107-8556 (JP); NIIJIMA, Shun, Wako-shi Saitama 107-8556 (JP); NAKAYAMA, Koichi, Wako-shi Saitama 107-8556 (JP)
(74) Representative: Kiwit, Benedikt
(86) International application number: PCT/JP2017/021214
(87) International publication number: WO 2018/225199

(56) References cited:
- EP-A1- 3 002 188
- EP-A1- 3 072 791
- EP-A2- 2 082 951
- JP-A- 2001 106 144
- JP-A- 2009 061 890
- JP-A- 2013 063 739
- JP-A- 2014 069 596
- JP-A- 2015 178 341
- US-A- 4 331 358
- US-A1- 2014 159 426
- US-B1- 7 347 485

## Description

### FIELD

The present invention relates to a saddled vehicle including a front cowl which exhibits improved wind-shielding performance on the rider's upper body while still providing great handle steering angles.

### BACKGROUND

A conventional saddled vehicle includes, on its front side, a front cowl for shielding the upper body and others of the rider against wind. The front cowl has its portions in front of a handlebar removed to form recessed parts for clearing the path for the handlebar. Thus, great handle steering angles are permitted (see Patent Literature 1).

### CITATION LIST

### PATENT LITERATURE

Patent Literature 1: Japanese Unexamined Patent Application Publication No. 2016-68853 For instance, US 4 331 358 A shows a motorcycle fairing consisting of a front cowl and a windshield, which is disposed above the front cowl. The front cowl has a narrow part that is narrowed by a recessed part. To improve the rider protection, extenders are disposed on each lateral outer edges of the front cowl and cover the front side of the recessed part. The extenders are attached to the windshield and the front cowl, wherein the extenders are disposed under the front cowl. Said prior art document discloses the features of the preamble of claim 1.

### BRIEF SUMMARY

### TECHNICAL PROBLEM

In the conventional saddled vehicle including the front cowl provided with recessed parts for clearing the path for the handlebar, airflow passing through the recessed parts is brought into direct contact with the rider's upper body, particularly the chest and the shoulders. This air pressure is a factor of fatigue in riding. In particular, the air pressure on the rider increases when the rider is speeding faster.

On the other hand, the recessed parts for clearing the path for handlebar are necessary in providing great handle steering angles. A greater handle steering angle necessitates an increase in size of the recessed parts for clearing the path for the handlebar.

Some vehicles need great handle steering angles depending on their uses, and particularly many off-road vehicles do. With a raised handle in which part of the handlebar is bent upward so as to raise the grip higher, the recessed parts for clearing the path for the handlebar become as high as the rider's chest level. Furthermore, with the vehicles provided with hand guards on the front side of the grips of the handlebar, the recessed parts must be increased in size.

Here, greater recessed parts for clearing the path for the handlebar increase the air pressure on the rider.

An object of the present invention is to improve wind-shielding performance on the rider's upper body while still providing great handle steering angles.

### SOLUTION TO PROBLEM

In order to solve the problem, a first aspect of the present invention provides a saddled vehicle including: a front wheel suspension device (10); a handlebar (12) for steering the front wheel suspension device; and a front windshield device (19) including a front cowl (18) covering an upper part of the front wheel suspension device and the handlebar from a front side; and a screen (17) disposed above the front cowl. The front windshield device (19) is provided with a recessed part (33) for clearing a path for the handlebar by being recessed on a front side relative to the handlebar. The front windshield device (19) includes a narrow part (31) narrowed by the recessed part (33) and extending on an inner side relative to the recessed part (33) upward from a height of the handlebar (12). A visor (20) extending laterally outward from the narrow part (31) to cover a front side of the recessed part (33) and a front side of the handlebar (12). The visor (20) is disposed on a front side of the narrow part (31).

In this configuration, the visor (20) which does not interfere with the steered handlebar (12) covers the front side of the recessed part (33). The visor (20) extends laterally outward. Accordingly, the visor (20) causes the airflow toward the recessed part (33) to flow laterally outward.

The visor (20) has its inner end mounted on the narrow part to be a mount part (40), and the visor (20) includes a step part (41) being bent at the mount part and extending laterally outward, and an air guide part (42) being bent rearward at the step part and extending further laterally outward, a surface of the air guide part (42) functioning as an air guide surface.

Thus, the visor (20) is extended laterally outward on the front side of the handlebar (12) while avoiding interference with the handlebar (12).

The step part (41) of the visor (20) includes an air guide port (43).

Thus, part of the airflow is guided from the air guide port (43) to the rear surface side of the air guide part (42). Accordingly, the negative pressure occurring on the rear surface side of the air guide part (42) attributed to the airflow flowing along the surface of the air guide part (42) is adjusted by the airflow flowing on the rear surface side of the air guide part (42).

In a second aspect of the present invention, the air guide part (42) of the visor (20) has its height reduced outward.

This configuration reduces the air pressure on the outer end of the air guide part (42) and, therefore, reduces rattle which occurs at the outer end of the air guide part (42).

In a third aspect of the present invention, the handlebar (12) includes a hand guard (16) at each of its opposite ends.

Thus, by the visor (20) being disposed on the front side of the narrow part (31), the hand guard (16) is disposed while avoiding interference with the visor (20), and without affecting the steering angles of the handlebar.

### ADVANTAGEOUS EFFECTS

The visor which covers the front side of the recessed part for clearing the path for the steering handlebar and which extends laterally outward is disposed on the front side of the narrow part formed by the recessed part of the front windshield device. The visor causes airflow toward the recessed part to flow laterally outward, thereby diverting the airflow away from the rider. By virtue of the visor being disposed on the front side of the narrow part, interference with the steered handlebar is avoided.

Accordingly, the present disclosure improves the wind-shielding performance on the rider's upper body while still providing great handle steering angles.

As a result, the present disclosure achieves reduced fatigue in riding, that is, fatigue in long-distance touring over long hours and in riding at high speeds.

### BRIEF DESCRIPTION OF DRAWINGS

FIG. 1 is a perspective view of a saddled vehicle.
FIG. 2 is a front view of a vicinity of an upper lateral portion at a front wind-shielding part.
FIG. 3 is a perspective view of the front wind-shielding part.
FIG. 4 is a front view of the front wind-shielding part.
FIG. 5 is an upper perspective view of a mounted visor.
FIG. 6 is a front view of the visor.
FIG. 7 is a cross-sectional view taken along line 7-7 in FIG. 6.
FIG. 8 is a front view of an upper lateral portion of a front wind-shielding part according to other embodiment.

### DETAILED DESCRIPTION

In the following, a description will be given of an embodiment.

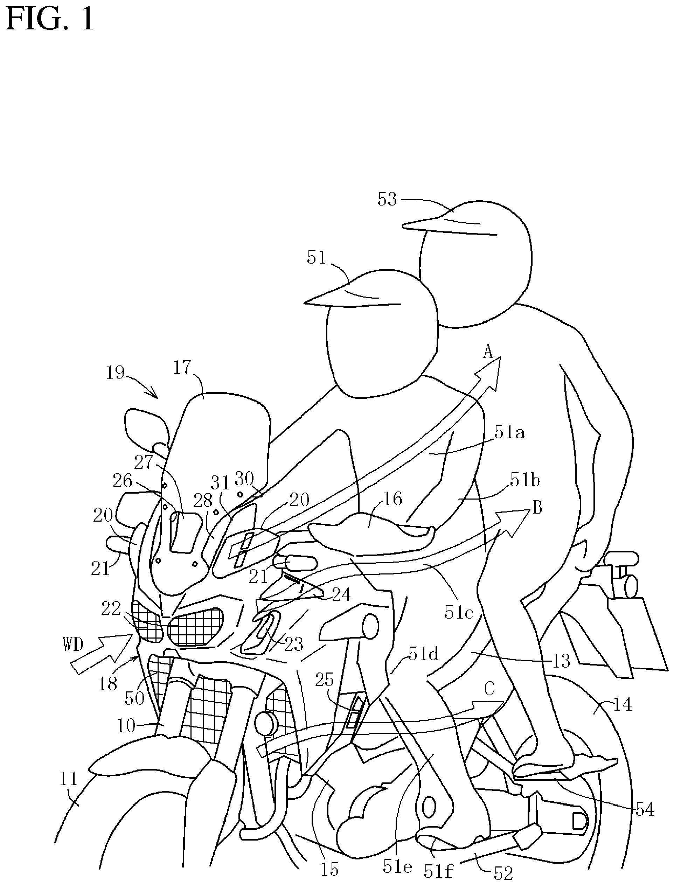

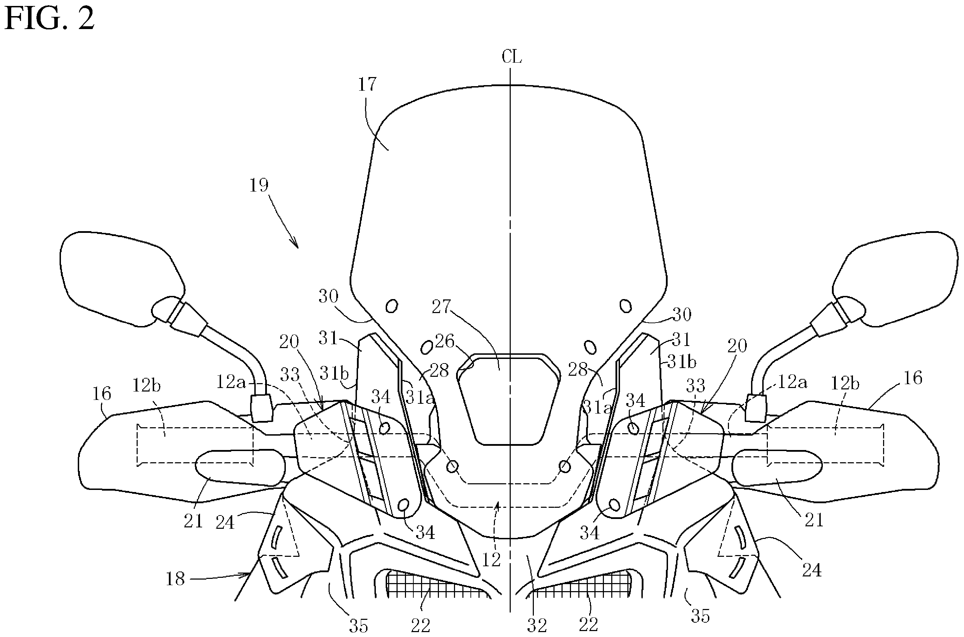

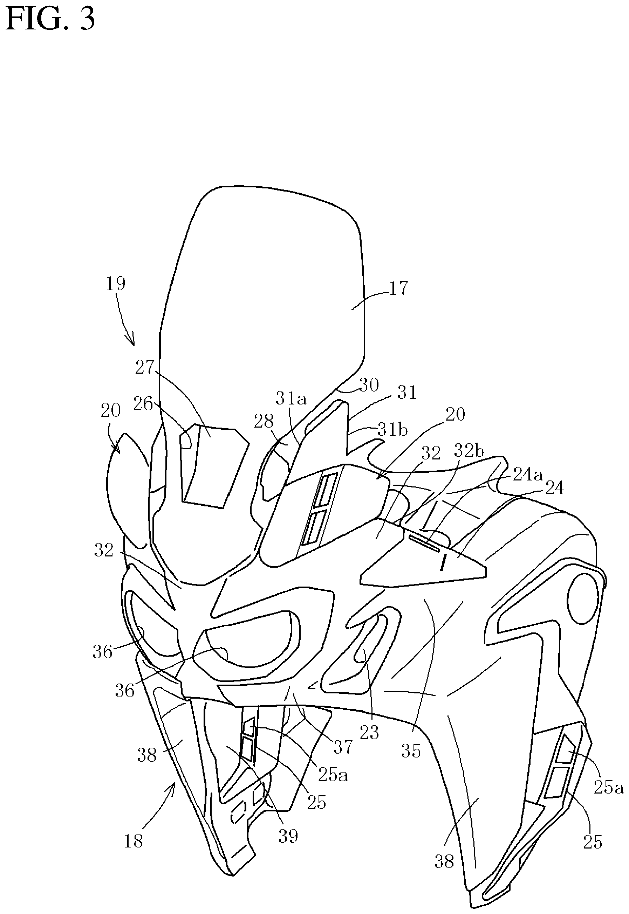

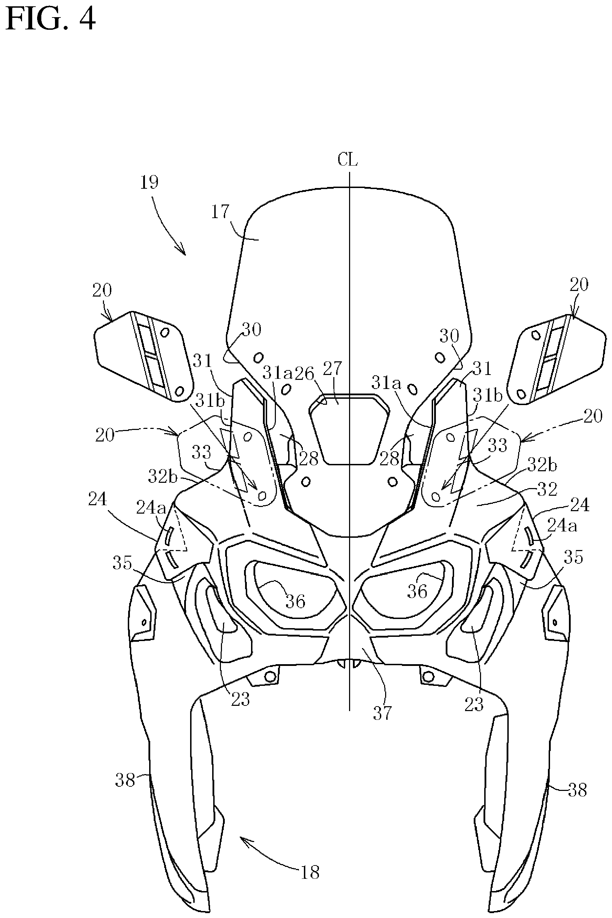

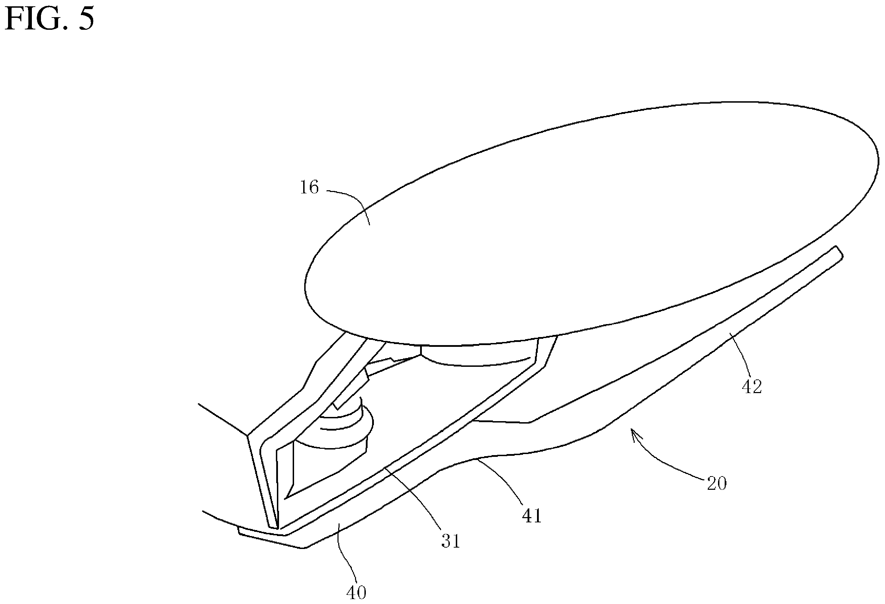

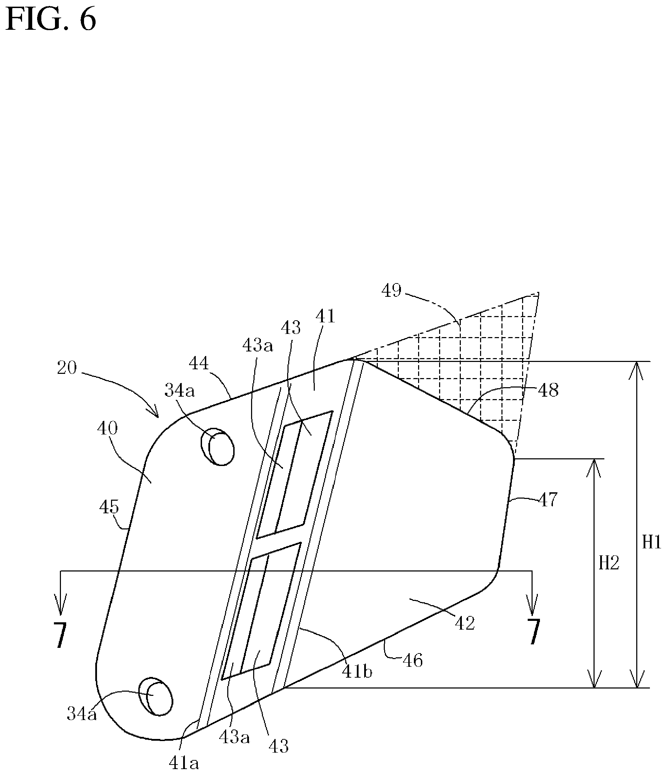

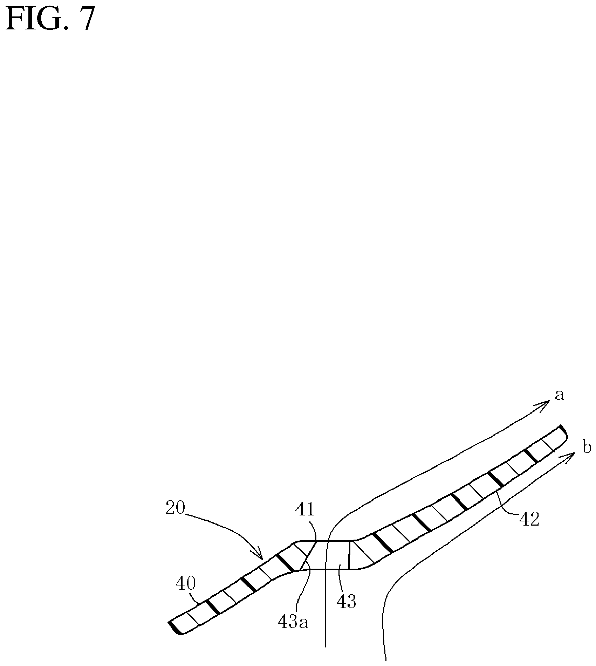

FIG. 1 is a perspective view of a saddled vehicle. FIG. 2 is a front view of the front part of the saddled vehicle. FIGS. 3 and 4 are a perspective view and a front view of a front windshield device, respectively. FIG. 5 is an upper perspective view of a visor mounted on the vehicle body. FIG. 6 is a front view of the visor. FIG. 7 is a cross-sectional view taken along line 7-7 in FIG. 6.

FIG. 1 shows a saddled vehicle which is a tandem off-road motorcycle and includes: a front fork 10 (a front wheel suspension device) rotatably supported on a front part of a vehicle body frame (not shown); a front wheel 11 supported on a lower part of the front fork 10; a steering handlebar 12 mounted on an upper part of the front fork 10; a tandem seat 13 disposed behind the handlebar 12; a rear wheel 14 disposed below the seat 13 and supported on the vehicle body frame; and an engine 15 disposed between the front wheel 11 and the rear wheel 14 and supported on the vehicle body frame.

The handlebar 12 is a bar-type handle, and a raised handle which is partially bent to raise handle grips 12b (FIG. 2) on the longitudinal opposite ends. The handle grips 12b have their front side covered with hand guards 16. The hand guards 16 protect the hand gripping the handlebar, and also function as windshield members for reducing the air pressure on the handle grips 12b.

The handlebar 12 has its front side covered with a front windshield device 19 made up of a screen 17 and a front cowl 18. The front windshield device 19 guides the airflow toward the riders (a driver 51 and a pillion passenger 53) associated with the traveling to deflect the airflow from them.

FIG. 1 shows a leg 51f of the rider 51 put on a footrest 52, and a pillion footrest 54 for the passenger 53.

On the position above the screen 17 and on the front side of the handlebar 12, visors 20 formed of plate-like transparent resin are provided. The visors 20 are one of the air guide members.

In the vicinity of the visors 20, turn signal lights 21 are provided to extend in the vehicle width direction, and overlap with the hand guards 16 as seen in a front view. This configuration disperses the airflow against the hand guards 16.

On the front end of the vehicle positioned below the screen 17 and projecting frontward from the front cowl 18, a right and left pair of headlights 22 are provided.

In the front cowl 18, on the right and left sides of the headlight 22, air ducts 23 are provided for taking in the air into the air cleaners which are not shown.

On the lateral sides of the front cowl 18 at a level higher than the air ducts 23, upper deflectors 24 are provided lower than and in the vicinity of the turn signal lights 21. On the lateral sides and below the front cowl 18 and on the front side of the rider's knees, lower deflectors 25 are provided.

The upper deflectors 24 and the lower deflectors 25 are air management devices, which contribute to improving traveling stability at high speeds.

Other air management configurations include an opening 26 provided at a lower central portion in the screen 17, gaps 28 formed between the screen 17 and the visors 20, and the visors 20.

The visors 20, the turn signal lights 21, the air ducts 23, the upper deflectors 24, the lower deflectors 25, and the gaps 28 are provided to form right and left pairs on the vehicle.

FIG. 2 is a front view of an upper lateral portion mainly showing the vicinity of the visors 20 in the front part of the vehicle. With reference mainly to FIG. 2 and additionally to FIGS. 3 to 5, a description will be given of the upper part configuration of the front windshield device 19. The screen 17 is formed of transparent resin, has a vertically elongated shape, and mounted on the upper part of the front cowl 18 so as to be inclined rearward.

The surface of the screen 17 is a three-dimensional curved surface which is convex frontward to function as an airflow smoothing surface. In terms of the top-bottom direction, the curved surface extends rearward obliquely upward; and in terms of the right-left direction, the curved surface spreads rearward obliquely lateral outward.

The lower part of the screen 17 is narrowed because of the provision of right and left recessed parts 30. The opening 26 is formed at the center of the narrowed portion. Behind the opening 26, a guide member 27 is disposed so as to incline rearward to cover the rear side of the opening 26. The guide member 27 is plate-like and has its lower part mounted on the upper part of the front cowl 18, and has its upper part spaced apart from the screen 17 so as to cause the air entering the opening 26 to flow upward along the back surface of the screen 17.

The negative pressure caused on the rear surface side of the screen 17 attributed to the air flowing along the surface of the screen 17 is adjusted by the air entering the opening 26 and flowing along the back surface of the screen 17.

The recessed parts 30 are formed at right and left lower sides of the screen 17 forming curves projecting toward the vehicle center (toward the center line CL).

On the outer lateral sides of the recessed parts 30, upward extended parts 31 are integrated with the upper part of the front cowl 18 so as to project upward. The upward extended parts 31 also are provided in a right and left pair. The upward extended parts 31 are each a narrow part of the present invention.

The upward extended parts 31 are disposed in the space outer than the screen 17, which space is formed by the recessed parts 30. Between each upward extended part 31 and the screen 17, a gap 28 is formed. The surface of each upward extended part 31 functions as an airflow smoothing surface oriented frontward and obliquely outward.

Each upward extended part 31 extends in the front-rear direction, and its front edge 31a is at a substantially similar position as the surface of the screen 17. Between the front edge 31a and the corresponding recessed part 30, the gap 28 is formed.

A rear edge 31b of the upward extended part 31 is positioned outer than the front edge 31a.

The airflow bent laterally outward at the lower surface of the screen 17 and flowing rearward enters each gap 28, and flows laterally outward along the rear surface of the upward extended part 31.

On the other hand, the surface of the upward extended part 31 is configured to guide laterally outward the air from the front and the airflow flowing along the screen 17. The negative pressure occurring on the rear surface side of the upward extended part 31 attributed to the air flowing along the surface of the upward extended part 31 is adjusted by the air entering the gap 28 and flowing along the back surface of the upward extended part 31.

The upward extended part 31 is continuous to an upper surface 32 of the front cowl 18. The upper surface 32 functions as an airflow smoothing surface below the screen 17 and over the headlights 22, and forms a three-dimensional curved surface which extends rearward obliquely upward, and laterally outward and obliquely upward.

A rear edge 32b of the upper surface 32 is continuous to the rear edge 31b. This continuous part is shaped as a recessed part 33 for clearing the path for the handlebar in steering.

The handlebar 12 has a bent shape, in which the longitudinally intermediate part is bent upward to be raised, and again extends outward substantially horizontally, to form raised parts 12a. Handle grip parts 12b are provided at the longitudinally opposite ends of the handlebar 12.

The recessed part 33 is formed by having the rear part of the upward extended part 31 and part of the rear part of the front cowl 18 recessed so as not to interfere with the rotation range of the raised part 12a of the handlebar 12 and thus to provide great steering angles of the handlebar 12. As a result of being provided with the recessed part 33, the upward extended part 31 is reduced in width (the width in right-left direction), and formed as a narrow part which extends upward inner than the recessed part 33.

This narrow portion is substantially the entire upward extended part 31, and located on the front side of the raised part 12a of the handlebar 12 and at a level higher than the raised part 12a.

At a lower part in the front surface of the upward extended part 31, the visor 20 is removably mounted by fixing elements such as bolts 34 so as to cover the front side of the recessed part 33. The visor 20 functions as an airflow smoothing surface extending obliquely rearward and laterally outward form the upward extended part 31. The visor 20 is disposed at a predetermined distance from the raised part 12a of the handlebar 12 and the hand guard 16 so as to avoid interference with them. In the vicinity of the visor 20 where it is mounted on the upward extended part 31, an air guide port 43 opening frontward is formed.

Next, with reference to FIGS. 5 to 7, a description will be given mainly of the details of the visor 20.

The visor 20 is a plate-like member formed of transparent resin. The visor 20 curves from the inner side toward the outer side, and includes a mount part 40, a step part 41, and an air guide part 42.

As shown in FIG. 5, the mount part 40 is mounted along the surface of the upward extended part 31, at upper and lower through holes 40a, 40a by the bolts 34 (FIG. 2), and extends laterally outward and rearward obliquely downward.

The step part 41 is formed by the visor 20 being valley-folded to form a substantially horizontal plane extending laterally outward, and oriented frontward. Reference character 41a indicates the valley-fold bent line. At the step part 41, the upper and lower two pieces of air guide ports 43 are provided. Note that, the upper and lower air guide ports 43 may be continuous to each other to be one in number. Alternatively, three or more pieces of air guide ports 43 may be provided.

Each air guide port 43 opens frontward, and penetrates through the step part 41. In the wall surface surrounding the air guide port 43, an inner wall surface 43a is an inclined surface in which the rear side is oriented laterally outward. As indicated by arrow a in FIG. 7, the wall surface 43a bends the airflow entering the air guide port 43 so that the airflow flows laterally outward.

From a bent part 43b where the visor 20 is mountain-folded on the outer side relative to the step part 41, the air guide part 42 extends laterally outward and again rearward obliquely downward. The tip of the air guide part 42 extends to the vicinity of the hand guard 16 (see FIG. 2).

FIG. 5 schematically shows the hand guard 16 in the foremost position when the handlebar is steered by a maximum degree. In this manner, the tip of the air guide part 42 is disposed so as not to interfere with the hand guard 16 in the foremost position.

In particular, by virtue of the visor 20 being formed stepwise by the step part 41, the air guide part 42 is disposed frontward. This configuration allows the visor 20 to extend on the front side of the handlebar 12 and to extend its air guide part 42 laterally outward while avoiding interference with the handlebar 12.

As shown in FIG. 6, the left visor 20 has a substantially quadrilateral shape, in which the upper side is partially inversely inclined. That is, defining that the four surrounding sides are an upper side 44, an inner lateral side 45, a lower side 46, and an outer lateral side 47, the upper side 44 and the lower side 46 are substantially parallel to each other and extend in an upper right direction (with reference to the drawing's surface, the same holds true for the following). Similarly, the inner lateral side 45 and the outer lateral side 47 are substantially parallel to each other and extend in an upper right direction.

However, the upper side 44 is bent downward by the air guide part 42. That is, the upper side 48 in the air guide part 42 inversely inclined, i.e., in a lower right direction, to be lower than the step part 41. The visor 20 has a shape which would be obtained by removing, from a quadrilateral, a triangular portion 49 formed by extended lines of the upper side 44 and the outer lateral side 47 represented by phantom lines.

As a result, the top-bottom width of the air guide part 42 is narrower on the outer side. Accordingly, the air guide part 42 has a highest height of HI on the step part 41 side, and has a lower height H2 than HI on the outer lateral side 47 at the outer end. That is, the vertical width which is the top-bottom direction width also varies to be narrow laterally outward.

This configuration reduces the air pressure on the outer end side, and minimizes rattle.

The right visor has symmetry with the left visor.

FIG. 7 illustrates the airflow on the front and back sides of the air guide part 42. The airflow toward the visor 20 is bent laterally outward as indicated by arrow b by the surface of the air guide part 42, and flows toward the outer lateral side 47 while being smoothed along the surface.

On the other hand, part of the airflow enters the air guide port 43 as indicated by arrow a, to exit to the back side of the air guide part 42. Here, the airflow is bent laterally outward by the wall surface 43a, and flows toward the outer lateral side 47 along the back surface of the air guide part 42.

Accordingly, the negative pressure occurring at the back surface of the air guide part 42 attributed to the airflow on the front side (arrow b) is adjusted by the airflow, which is indicated by arrow a, formed on the rear surface side of the air guide part 42.

Next, with reference to FIGS. 3 and 4, a description will be given of the whole configuration of the front cowl 18. For the sake of convenience, FIG. 3 shows the visors 20 as being separated. In a later process, the visors 20 are mounted on the front side of the upward extended part 31.

At the center of the front cowl 18, headlight openings 36 for the headlights 22 to be fitted into are provided. The lateral sides of the headlight openings 36 form lateral parts 35 which function as airflow smoothing surfaces continuous to the upper surface 32 on the upper side. The lateral parts 35 are each provided with a substantially V-shaped groove as seen in a front view extending in the front-rear direction.

Rear ends 35b of the lateral parts 35 are continuous to the rear edge 32b.

At front parts of the lateral parts 35, air ducts 23 open. At rear parts of the lateral parts 35, the upper deflectors 24 are provided to cover the recessed parts, and open at rear ends 35b.

The upper deflectors 24 function as airflow smoothing surfaces, and provided with openings 24a opening frontward. Part of airflow on the upper deflectors 24 enters the upper deflectors 24 from the openings 24a, and exits rearward from the rear ends 35b.

The lower part of the headlight openings 36 form a lower part 37 which is inverted U-shaped as seen in a front view, and covers a radiator 50 (FIG. 1). The right and left lateral parts form radiator shrouds 38, which cover the lateral sides of the radiator 50 and are provided with airflow exhaust ports 39. The radiator shrouds 38 are positioned on the front side of the knees 51d and the shins 51e of the rider 51 (FIG. 1).

In the rim around each airflow exhaust port 39, the rear edge is widened, where the corresponding lower deflector 25 is provided. The lateral surface of the lower deflector 25 is juxtaposed to the rear part of the lower lateral surface of the corresponding radiator shroud 38 and functions as an airflow smoothing surface. At the front surface of the radiator shroud 38, an opening 25b opening frontward is provided to penetrate in the front-rear direction.

The airflow passing through the lower part in the lateral surfaces of each radiator shroud 38 exits the airflow exhaust port 39 and flows the outer lateral surface of the lower deflector 25. Part of this airflow enters the opening 25b to flow rearward, and adjusts the negative pressure on the rear side of the lower deflector 25.

Next, a description will be given of the operation of the present embodiment.

In FIG. 1, part of air WD against the front windshield device 19 is caused to flow upward by the screen 17, and to spread rightward and leftward by the front cowl 18. Thus, by diverting the air so as to avoid direct contact with the upper body of the rider 51 and that of the passenger 53 seated behind the rider, the front windshield device 19 exhibits its wind-shielding effect.

Here, on the front side of the handlebar 12, the recessed parts 33 are provided. Conventionally, part of the airflow passing through such recessed parts is brought into direct contact with the chest 51a and the arms (particularly the forearms 51b) of the rider 51. This air pressure increasingly causes fatigue of the rider. In particular, the air pressure becomes greater when the rider is speeding faster, worsening the fatigue.

In the present embodiment, the visors 20 are provided so as to cover the recessed parts 33. Thus, the airflow is curved on the visors 20 to flow as indicated by arrow A over the shoulder laterally outward, and diverted away from the rider 51 and the passenger 53.

Thus, the upper body, particularly the chest 51a and the arms (particularly the forearms 51b) are protected against the airflow, whereby fatigue in riding long hours or at high speeds is reduced.

As indicated by arrows a and b in FIG. 7, the airflow flowing on the front and back sides of each visor 20 adjusts the negative pressure occurring on the rear surface side of the visor 20 thereby realizing air management. This contributes to improving traveling performance, in particular, to improving traveling stability at high speeds.

The present embodiment provides the recessed parts 33 of great size and, therefore, provides great handle steering angles. Accordingly, the present embodiment is suitable to a vehicle requiring great handle steering angles, particularly an off-road vehicle. Additionally, provision of the hand guards 16 does not affect the handle steering angles and, therefore, the present embodiment is also suitable to a vehicle including the hand guards 16. That is, the present embodiment is optimum for an off-road vehicle including the hand guards 16 and requiring great steering angles.

As indicated by arrow B in FIG. 1, the upper deflectors 24 divert the airflow in an intermediate part in the top-bottom direction laterally outward from the abdomen (particularly the sides) 51c. Thus, the present embodiment particularly improves the wind-shielding performance on the abdomen (particularly the sides) 51c.

Additionally, the airflow flowing on the inner and outer sides of the upper deflectors 24 realizes air management of adjusting the negative pressure occurring on the rear surface side of the upper deflector 24. This further contributes to improving the traveling performance.

As indicated by arrow C, the lower deflectors 25 deflect the airflow in the lower part in the top-bottom direction laterally outward below the knees 51d. Thus, the present embodiment improves the wind-shielding performance on the knees 51d and the shins 51e.

Here, the airflow flowing on the inner and outer sides of the lower deflectors 25 realizes air management of adjusting the negative pressure occurring on the rear surface side of the lower deflector 25. In particular, the present embodiment contributes to improving traveling performance at high speeds.

Furthermore, the opening 26 realizes air management on the screen 17, and the gaps 28 and the upward extended parts 31 realize air management on the upward extended parts 31.

By the turn signal lights 21 being disposed so as to overlap with the hand guards 16 on the front side, the turn signal lights 21 disperse the air against the hand guards 16 thereby reducing the air pressure on the hand guards 16.

As a result of these elements achieving wind shielding and air management, fatigue is further reduced. This realizes stabilized longer-hour riding with reduced fatigue.

The present invention is not limited to the embodiment above, and various applications and variations can be made. For example, instead of providing the upward extended parts 31 at the front cowl 18, the lower part of the screen 17 may be widened rightward and leftward, and recesses may be formed on the right and left portions for clearing the path for the handlebar.

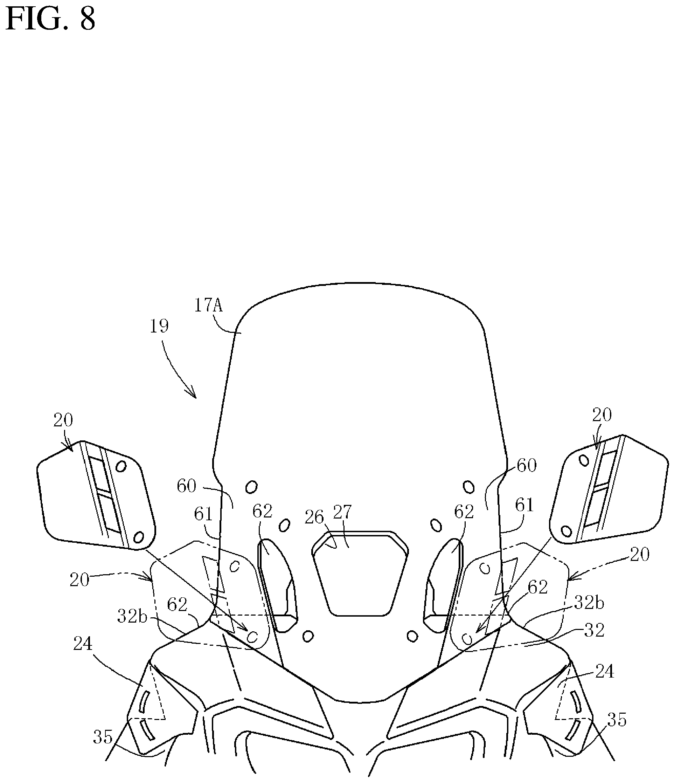

FIG. 8 shows such a variation, and is other embodiment of the site shown in FIG. 2. The elements similar to those of the foregoing embodiment are denoted by identical reference characters.

A screen 17A according to the embodiment does not include the recessed parts 30 according to the foregoing embodiment. The lower right and left sides of the screen 17A includes expanded parts 60 which correspond to the upward extended parts 31. The expanded parts 60 has their lateral parts recessed to form recessed parts 61 which are continuous to the rear edges 32b. The recessed parts 61 are continuous to the rear edges 32b for clearing the path for the handlebar in steering similarly to the recessed parts 33 according to the foregoing embodiment.

The gaps 28 are formed as holes 62 penetrating through the screen 17A between the expanded parts 60 and the opening 26. The visors 20 are provided on the front side of the expanded parts 60 similarly to the foregoing embodiment. This configuration similarly improves the wind-shielding performance on the chest 51a and the forearms 51b of the rider 51 (see FIG. 1) and still provides great handle steering angles by provision of the recessed parts 61 of the screen 17A.

That is, the recessed parts (33, 61) for clearing the path for the handlebar in steering may be provided at one of or both of the front cowl 18 and the screen 17. In this regard, the recessed parts 33 may be provided at the front windshield device 19.

A saddled vehicle to which the present invention is applied is not limited to an off-road vehicle, and may be any vehicle of various uses. The hand guards 16 may be dispensed with.

The vehicle may not be a motorcycle, and may be a three-wheel vehicle or a four-wheel vehicle.

The handlebar 12 may not necessarily be a raised handle so long as it is a bar-type handle.

### INDUSTRIAL APPLICABILITY

The present invention improves wind-shielding performance on the chest 51a and the forearms 51b of the rider 51 and still provides great handle steering angles, allowing the rider to ride for long hours with less fatigue. Therefore, the present invention is useful for a saddled vehicle including the front windshield device.

### Reference Signs List

12: handlebar
12a: raised part
16: hand guards
17, 17A: screen
18: front cowl
19: front windshield device
20: visor
31: upward extended part
33: recessed part
40: mount part
41: step part
42: air guide part
43: air guide port
61: recessed part

## Claims

1. A saddled vehicle comprising:
a front wheel suspension device (10);
a handlebar (12) for steering the front wheel suspension device; and
a front windshield device (19) including
a front cowl (18) covering an upper part of the front wheel suspension device and the handlebar from a front side; and
a screen (17) disposed above the front cowl, wherein
the front windshield device (19) is provided with a recessed part (33) for clearing a path for the handlebar by being recessed on a front side relative to the handlebar,
the front windshield device (19) includes
a narrow part (31) narrowed by the recessed part (33) and extending on an inner side relative to the recessed part (33) upward from a height of the handlebar (12), and
a visor (20) extending laterally outward from the narrow part (31) to cover a front side of the recessed part (33) and a front side of the handlebar (12), the visor (20) being disposed on a front side of the narrow part (31),
wherein the visor (20) has its inner end mounted on the narrow part to be a mount part (40),
wherein the visor (20) includes a step part (41) being bent at the mount part and extending laterally outward, and an air guide part (42) being bent rearward at the step part and extending further laterally outward, a surface of the air guide part (42) functioning as an air guide surface, **characterised in that** the step part (41) of the visor (20) includes an air guide port (43).

2. The saddled vehicle according to claim 1, wherein the air guide part (42) of the visor (20) has its height reduced outward.

3. The saddled vehicle according to claim 1 or 2, wherein the handlebar (12) includes a hand guard (16) at each of its opposite ends.

## Patentansprüche

1. Sattelfahrzeug, mit:
einer Vorderradaufhängungsvorrichtung (10);
einem Lenker (12) zum Lenken der Vorderradaufhängungsvorrichtung; sowie
einer Frontscheibenvorrichtung (19), die
eine Frontverkleidung (18), welche einen oberen Teil der Vorderradaufhängungsvorrichtung und den Lenker von einer Vorderseite her abdeckt; und
eine oberhalb der Frontverkleidung angeordnete Abschirmung (17) aufweist, wobei
die Frontscheibenvorrichtung (19) mit einem vertieften Teil (33) zum Freihalten einer Bahn für den Lenker versehen ist, indem sie auf einer Vorderseite gegenüber dem Lenker vertieft ist,
die Frontscheibenvorrichtung (19)
einen schmalen Teil (31), der durch den vertieften Teil (33) verengt ist und an einer Innenseite bezüglich des vertieften Teils (33) von einer Höhe des Lenkers (12) nach oben verläuft, sowie
eine Sonnenblende (20) aufweist, die sich seitlich nach außen von dem schmalen Teil (31) erstreckt, um eine Vorderseite des vertieften Teils (33) und eine Vorderseite des Lenkers (12) abzudecken, wobei die Sonnenblende (20) auf einer Vorderseite des schmalen Teils (31) angeordnet ist,
wobei das innere Ende der Sonnenblende (20) an dem schmalen Teil als ein Befestigungsteil (40) angebracht ist,
wobei die Sonnenblende (20) einen Stufenteil (41), der an dem Befestigungsteil abgewinkelt ist und seitlich nach außen verläuft, und einen Luftleitteil (42) aufweist, der an dem Stufenteil nach hinten abgewinkelt ist und weiter seitlich nach außen verläuft, wobei eine Fläche des Luftleitteils (42) als eine Luftleitfläche wirkt, **dadurch gekennzeichnet, dass**
der Stufenteil (41) der Sonnenblende (20) eine Luftleitöffnung (43) aufweist.

2. Sattelfahrzeug nach Anspruch 1, wobei die Höhe des Luftleitteils (42) der Sonnenblende (20) nach außen verringert ist.

3. Sattelfahrzeug nach Anspruch 1 oder 2, wobei der Lenker (12) an jedem seiner entgegengesetzten Enden einen Handschutz (16) aufweist.

## Revendications

1. Véhicule à selle comprenant :
un dispositif de suspension de roue avant (10) ;
un guidon (12) pour diriger le dispositif de suspension de roue avant ; et
un dispositif de pare-brise avant (19) comportant
un capot avant (18) couvrant une partie supérieure du dispositif de suspension de roue avant et le guidon à partir d'un côté avant ; et
un écran (17) disposé au-dessus du capot avant, dans lequel
le dispositif de pare-brise avant (19) est muni d'une partie évidée (33) pour dégager un trajet pour le guidon en étant évidée sur un côté avant par rapport au guidon,
le dispositif de pare-brise avant (19) comporte
une partie étroite (31) rendue étroite par la partie évidée (33) et s'étendant sur un côté interne par rapport à la partie évidée (33) vers le haut à partir d'une hauteur du guidon (12), et
une visière (20) s'étendant latéralement vers l'extérieur à partir de la partie étroite (31) pour couvrir un côté avant de la partie évidée (33) et un côté avant du guidon (12), la visière (20) étant disposée sur un côté avant de la partie étroite (31),
dans lequel la visière (20) a son extrémité interne montée sur la partie étroite pour être une partie de support (40),
dans lequel la visière (20) comporte une partie de décrochement (41) qui est fléchie au niveau de la partie de support et s'étendant latéralement vers l'extérieur, et une partie de guidage d'air (42) qui est fléchie vers l'arrière au niveau de la partie de décrochement et s'étendant davantage latéralement vers l'extérieur, une surface de la partie de guidage d'air (42) fonctionnant comme une surface de guidage d'air, **caractérisé en ce que**
la partie de décrochement (41) de la visière (20) comporte un orifice de guidage d'air (43).

2. Véhicule à selle selon la revendication 1, dans lequel la partie de guidage d'air (42) de la visière (20) a sa hauteur réduite vers l'extérieur.

3. Véhicule à selle selon la revendication 1 ou 2, dans lequel le guidon (12) comporte une protection pour les mains (16) à chacune de ses extrémités opposées.
